# EUROPEAN PATENT APPLICATION

(11) **EP 1 840 610 A1**
(43) Date of publication of application: **03.10.2007**
(21) Application number: 07290377.6
(22) Date of filing: 29.03.2007
(51) Int. Cl.: G02B 6/43, G02B 6/44

(54) **Optical/electrical circuit interconnect board and evaluation method therefor**

(30) Priority: 30.03.2006 JP 2006093333; 28.03.2007 JP 2007085881
(71) Applicant: FUJIKURA LTD., Kohtoh-ku, Tokyo (JP); Stanley Electric Co., Ltd., Meguro-ku Tokyo (JP)
(72) Inventor: Fukuta, Takeski, Sakura-shi Chiba-ken (JP); Ichii, Kentaro, Sakura-shi Chiba-ken (JP); Terada, Yoshihiro, Sakura-shi Chiba-ken (JP); Fujimaki, Munehisa, Sakura-shi Chiba-ken (JP); Oka, Hiroyuki, Tokyo (JP); Furukawa, Yoshiki, Tokyo (JP); Inuzuka, Katsumi, Tokyo (JP)
(74) Representative: Boire, Philippe Maxime Charles

(57) **Abstract**

An optical/electrical interconnect board includes a base material (2) comprising an electrical circuit; a plurality of light receiving/emitting units, each of the units being constituted by a light emitting element (3) and a light receiving element (4) packaged on the base material (2); and an optical fiber tape (7) that connects the light emitting element (3) to the light receiving element (4) for each of the light receiving/emitting units, the optical fiber tape (7) being formed by bringing together optical wires (5a,5b,5c,5d) for the units in a side-by-side manner and coating with a first coating material.

## Description

### BACKGROUND OF THE INVENTION

### Field of the Invention

The present invention relates to an optical/electrical interconnect board in which optical fibers are packaged, in combination with electrical circuits, on a substrate packaged with a plurality of light receiving/emitting units constituted by light emitting elements and light receiving elements, and to an evaluation method of the coupling efficiency of the optical fibers constituting the optical/electrical interconnect board.

Priority is claimed on Japanese Patent Application Nos. 2006-93333, filed March 30, 2006, and 2007-085881, filed March 28,2007, the contents of which are incorporated herein by reference.

### Description of the Related Art

Inside electronic equipments currently in wide use such as cellular phones, digital still cameras, and television sets, a vast multitude of electric circuits are used for transmission of a variety of information including signals of a control system and images. One example that uses an electrical circuit is a flexible printed circuit that features thinness, flexibility, etc. It is widely used because it can advantageously be installed with a multitude of electrical circuits in a small packaging area.

However, making the transmission rate in information by use of an electrical circuit faster results in problems such as noise or signal delay. Therefore, it is becoming more and more difficult to actualize an electrical circuit with a transmission rate faster than ever. Furthermore, even if a faster transmission rate is indeed actualized by use of an electrical circuit, there is a concern that it will bring about problems of an increase in packaging areas or manufacturing costs caused by the necessity for a complex electric circuit or an extra shield against noise.

To address these problems, an optical/electrical interconnect is under study that combines an optical interconnect that is less influenced by noise or signal delay compared with an electrical circuit and is excellent in speedy response and an electrical circuit that is in normal use. Among other things, an optical/electrical interconnect with flexibility has drawn attention since it can be mounted in narrow areas and movable portions such as a hinge of a cellular phone.

Furthermore, an optical/electrical interconnect is more often used for movable portions such as will be bent or twisted since consumer electric products come to have more functions and more complex designs. To give an example, it is becoming necessary for a cellular phone to have a bending function to achieve a compact outside shape while the LCD thereof is made larger. As for a digital still camera, a configuration is offered in which a lens portion can be rotated to allow a function to shoot a self-portrait.

As for such an optical/electrical interconnect with a combination of an optical fiber and an electrical circuit, for example, a flexible printed circuit and an optical fiber is proposed in which the electrical circuit is formed on a polymeric film formed with an optical waveguide (see Japanese Unexamined Patent Publication, First Publication No. H06-281831).

However, the manufacturing processes thereof are very complicated and it is difficult to reduce the cost, since this method first manufactures a polymer film formed with an optical waveguide, and makes a interconnect by forming an electrical circuit on the polymer film, and then packages light emitting element(s) and light receiving element(s). Furthermore, since the processes of forming an optical waveguide; forming an electrical circuit; and packaging light emitting element(s) and light receiving element(s) are sequentially performed on one substrate, there is another problem in that the yield of a product is reduced compared with the case where packaging is performed by assembling individual component parts, thus leading to an increase in manufacturing costs.

When an optical interconnect is packaged so as to cross (bridge) movable portions, not only are requirements for a bending radius and a degree of twist angle needed, but also high resistance to repeated bending and twisting is required of the optical interconnect. However, the method of the above-mentioned Japanese Unexamined Patent Publication, First Publication No. H06-281831 has nothing to meet these requirements.

Furthermore, there are cases in which an optical/electrical interconnect is required to have heat resistance to temperatures up to as high as 85°C in environments where it is used. At such temperatures, a single use of an optical fiber for an optical interconnect cannot steadily maintain transmission capability due to softening and constriction of the material thereof. Therefore, an optical/electrical interconnect is also expected to additionally have such heat resistance.

### SUMMARY OF THE INVENTION

The present invention has been achieved in view of the above-mentioned circumstances, and has a first object to provide an optical/electrical interconnect board comprising optical fibers that can be easily mounted with increased alignment accuracy and reduced cost with good yield, without requiring complicated operations, and that has both excellent resistance to bending as well as twisting and heat resistance to temperatures up to approximately 85°C.

The present invention has a second object to provide an estimation method of coupling efficiency between light emitting/receiving elements and the optical fibers that constitute the optical/electrical interconnect board.

An optical/electrical interconnect board according to a first aspect of the present invention includes: a base material comprising an electrical circuit; a plurality of light receiving/emitting units, each of the units being constituted by a light emitting element and a light receiving element packaged on the base material; and an optical fiber tape that connects the light emitting element to the light receiving element for each of the light receiving/emitting units, the optical fiber tape being formed by bringing together optical fibers for the units in a side-by-side manner and coating with a first coating material.

An optical/electrical interconnect board according to a second aspect of the present invention is the above-mentioned optical/electrical interconnect board, in which the base material is constituted by a single portion.

An optical/electrical interconnect board according to a third aspect of the present invention is the above-mentioned optical/electrical interconnect board, in which the base material is constituted by portions divided into at least two, on one of which is located the light emitting elements and on another of which is located the light receiving elements.

An optical/electrical interconnect board according to a fourth aspect of the present invention is the above-mentioned optical/electrical interconnect board, in which the base material is constituted by portions divided into at least two, and on each of the portions are located both one or more of the light emitting elements and one or more of the light receiving elements.

An optical/electrical interconnect board according to a fifth aspect of the present invention is the above-mentioned optical/electrical interconnect board, in which the optical fiber tape are arranged substantially parallel to one another in the longitudinal direction thereof,

An optical/electrical interconnect board according to a sixth aspect of the present invention is the above-mentioned optical/electrical interconnect board, in which the optical fiber tape include at least one plastic optical fiber and at least one reinforcing fiber member.

An optical/electrical interconnect board according to a seventh aspect of the present invention is the above-mentioned optical/electrical interconnect board, in which the reinforcing fiber member is a glass optical fiber.

An optical/electrical interconnect board according to an eighth aspect of the present invention is the above-mentioned optical/electrical interconnect board, in which the plastic optical fiber and the reinforcing fiber member have substantially the same outer diameter.

An optical/electrical interconnect board according to a ninth aspect of the present invention is the above-mentioned optical/electrical interconnect board, in which the optical fiber tape have a planarity of 50 µm or less, the planarity being obtained as a maximum value among distances from a reference line that is to come into simultaneous contact with outer peripheries of two outermost optical fibers of the arranged optical fibers to outer circumference(s) of the other optical wire(s).

An optical/electrical interconnect board according to a tenth aspect of the present invention is the above-mentioned optical/electrical interconnect board, in which the reinforcing wire member is located such that three or less plastic optical fibers are adjacent to each other.

An optical/electrical interconnect board according to an eleventh aspect of the present invention is the above-mentioned optical/electrical interconnect board, in which the plastic optical fiber and the reinforcing fiber member of the optical fibers are different in outer diameter from each other.

An optical/electrical interconnect board according to a twelfth aspect of the present invention is the above-mentioned optical/electrical interconnect board, in which when the optical fiber tape include an optical fiber of acrylic with a diameter of 250 µm as the plastic optical fiber and a glass fiber of silica glass as the reinforcing wire member, a value of a sum total cross-sectional area B of the reinforcing wire member divided by a sum total cross-sectional area A of the plastic optical fiber is in a range of 0.007 to 0.25.

An optical/electrical interconnect board according to a thirteenth aspect of the present invention is the above-mentioned optical/electncal interconnect board, in which the reinforcing wire member has a second coating material on the periphery thereof so as to have substantially the same outer diameter as that of the plastic optical fiber.

An optical/electrical interconnect board according to a fourteenth aspect of the present invention is the above-mentioned optical/electrical interconnect board, in which the plastic optical fiber and the reinforcing wire member are arranged in a laterally symmetrical manner.

In an evaluation method of coupling efficiency of an optical/electrical interconnect board according to a fifteenth aspect of the present invention, an optical/electrical interconnect board comprising: a base material comprising an electrical circuit; a plurality of light receiving/emitting units, each of the units being constituted by a light emitting element and a light receiving element packaged on the base material; and an optical fiber tape that optically connects the light emitting element to the light receiving element for each of the light receiving/emitting units, the optical fiber tape being formed by bringing together optical fibers for the units in a side-by-side manner and coating with a first coating material, is used to obtain as a planarity a maximum value among distances from a reference line that is to come into simultaneous contact with outer peripheries of two outermost optical fibers of the arranged optical fibers to outer circumference(s) of the other optical fiber(s),

An optical/electrical interconnect board according to the present invention includes: a base material comprising an electrical circuit; a plurality of light receiving/emitting units, each of the units being constituted by a light emitting element and a light receiving element packaged on the base material; and an optical fiber tape that optically connects the light emitting element to the light receiving element for each of the light receiving/emitting units, the optical fiber tape being formed by bringing together optical fibers for the units in a side-by-side manner and coating with a first coating material.

Thus, the optical fiber tape enables individual optical fibers that are to be connected for every light receiving/emitting unit to be connected at a time. Therefore, an Optical/electrical interconnect board comprising an optical fiber that can be easily mounted with increased mounting accuracy and reduced cost with good yield, without requiring complicated operations can be provided. In addition, bringing together a plurality of optical fibers in a side-by-side manner into a tape can prevent the optical fibers from tangling. This makes the fluctuation of optical fibers in outer diameter small compared with the case of a single optical fiber. Therefore, alignment accuracy of mounting can be improved. Furthermore, the optical/electrical interconnect board can be adapted to include optical fibers excellent in resistance to bending and twisting and in heat resistance to heat applied from the outside. Therefore, the present invention contributes to stability in communication characteristics.

An evaluation method of an optical/electrical interconnect board of the present invention obtains, as a planarity, a maximum value among distances from a reference line that is to come into simultaneous contact with outer peripheries of two outermost optical fibers of the arranged optical fibers that are brought together in a side-by-side manner to form a tape (hereinafter, referred to as optical fiber tape) to outer circumference(s) of the other optical fiber(s). Therefore, based on the planarity, the degree of alignment (in the direction perpendicular to the side-by-side direction) of optical fibers aligned side-by-side in the optical fiber tape can be evaluated.

Therefore, a method for evaluating coupling efficiency between light emitting/receiving elements and the optical fibers constituting an optical/electrical interconnect board can be provided.

### BRIEF DESCRIPTION OF THE DRAWINGS

FIG. 1 is a perspective view showing an example of an optical/electrical interconnect board according to the present invention.
FIG. 2 is a partial enlarged cross-sectional view of an example of an optical fiber tape to be packaged on an optical/electrical interconnect board according to the present invention, showing the cross-section taken along the line I-I in FIG. 1.
FIG. 3 is a perspective view showing another example of an optical/electrical interconnect board according to the present invention.
FIGS. 4A and 4B are perspective views showing another example of an optical/electrical interconnect board according to the present invention.
FIGS. 5A and 5B is a partial enlarged side view showing an example of a base material used for an optical/electrical interconnect board according to the present invention.
FIG. 6 is a partial enlarged side view showing another example of a base material used for an optical/electrical interconnect board according to the present invention.
FIG. 7 is a partial enlarged cross-sectional view showing an optical wiring tape to be packaged on an optical/electrical interconnect board according to the present invention, with an addition of a method for defining a planarity.
FIG. 8 is a partial enlarged cross-sectional view showing another example of an optical fiber tape to be packaged on an optical/electrical interconnect board according to the present invention.
FIG. 9 is a partial enlarged cross-sectional view showing another example of an optical fiber tape to be packaged on an optical/electrical interconnect board according to the present invention.
FIG. 10 is a partial enlarged cross-sectional view showing another example of an optical fiber tape to be packaged on an optical/electrical interconnect board according to the present invention.
FIG. 11 is a partial enlarged cross-sectional view showing another example of an optical fiber tape to be packaged on an optical/electrical interconnect board according to the present invention.
FIG. 12 is a partial enlarged cross-sectional view showing another example of an optical fiber tape to be packaged on an optical/electrical interconnect board according to the present invention.
FIG. 13 is a partial enlarged cross-sectional view showing another example of an optical fiber tape to be packaged on an optical/electrical interconnect board according to the present invention.
FIG. 14 is a partial enlarged cross-sectional view showing another example of an optical fiber tape to be packaged on an optical/electrical interconnect board according to the present invention.
FIG. 15 is a partial enlarged cross-sectional view showing another example of an optical fiber tape to be packaged on an optical/electrical interconnect board according to the present invention.
FIG. 16 is a partial enlarged cross-sectional view showing another example of an optical fiber tape to be packaged on an optical/electrical interconnect board according to the present invention.
FIG. 17 is a partial enlarged cross-sectional view showing another example of an optical fiber tape to be packaged on an optical/electrical interconnect board according to the present invention.
FIG. 18 is a partial enlarged cross-sectional view showing another example of an optical fiber tape to be packaged on an optical/electrical interconnect board according to the present invention.
FIG. 19 is a partial enlarged cross-sectional view showing another example of an optical fiber tape to be packaged on an optical/electrical interconnect board according to the present invention.

### DETAILED DESCRIPTION OF THE INVENTION

Hereunder is a description of an example of the present invention with reference to the drawings.

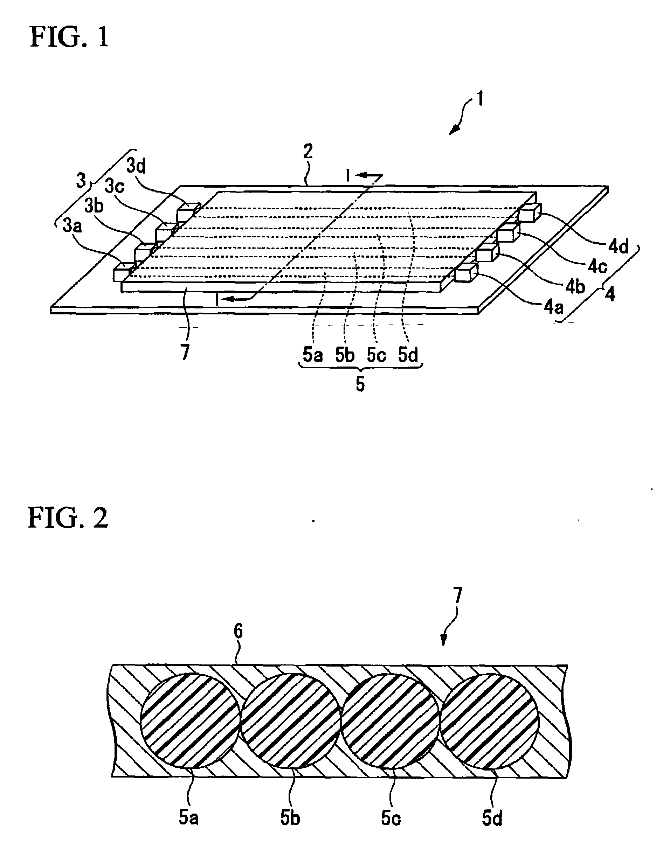

FIG. 1 is a schematic perspective view showing a first embodiment of an optical/electrical interconnect board 1 of the present invention.

In the following description, the term "light emitting direction" and the term "light receiving direction" refer to an optical axis. The term "light emitting portion" refers to a light emitting surface the normal to which coincides with the light emitting direction. The term "light receiving portion" refers to a light receiving surface the normal to which coincides with the light receiving direction.

As shown in FIG. 1, the optical/electrical interconnect board 1 of the present invention at least includes: a base material (substrate) 2; light emitting elements 3 and light receiving elements 4 packaged (mounted) on at least one surface of the substrate 2; and optical fibers 5 that optically connect the light emitting elements 3 to the light receiving elements 4.

The base material 2 is a substrate provided with an electrical circuit. One example whose movable part has flexibility is a flexible printed circuit (so-called FPC), which is like a pliant film with flexibility. The flexible printed circuit 2 is made of, for example, a single heat-resistant resin film. As for a heat-resistant resin film, a film made of, for example, a polyimide resin, a polyamide-imide resin, a polyetherimide resin, and a polyether ether ketone resin can be listed.

The electrical circuit is a metal circuit of aluminum (Al), copper (Cu), etc. For the manufacture thereof, a circuit pattern of aluminum (Al), copper (Cu), silver (Ag), gold (Au), etc. is formed by the vacuum deposition technique and the lithography technique. Other than this, the electrical circuit may be formed by first printing a conductive paste of copper (Cu), silver (Ag), gold (Au), etc. on the base material by the screen printing technique to form a circuit pattern, and then baking or curing the conductive paste. Furthermore, a technique for forming a circuit pattern may be used in which metal foils such as electrolytic copper foils are laminated and an etching resist formed with a desired pattern is used to chemically etch the metal foils.

The light emitting element 3 has a function to convert an electric signal from an electronic circuit (not shown) located on the substrate 2 into an optical signal and transmit the optical signal. A plurality (four, in the illustrated example, which are denoted by 3a, 3b, 3c, 3d) of the light emitting elements 3 are packaged on the substrate 2. As for the light emitting element 3, a light emitting diode, a semiconductor laser, and a surface emitting laser can be specifically listed. Peripheral circuitry thereof such as a driving circuit may be integrated.

It is preferable that the light emitting element 3 be formed with an electrode for electrically connecting to the substrate 2 such that when the light emitting element 3 is packaged on the substrate 2, a light emitting direction is parallel with the surface of the substrate 2.

The light receiving element 4 is either a discrete photo diode that has a light receiving surface for receiving an optical signal transmitted from the light emitting element 3 via the optical fiber or a circuit in which the photo diode and peripheral circuitry such as an amplifier are integrated, and has a function to convert the received optical signal into an electric signal responsive to the intensity of the received optical signal and output it. The same number (four, in the illustrated example, which are denoted by 4a, 4b, 4c, 4d) of the light receiving elements 4 as that of the light emitting elements 3 are packaged on the substrate 2. As for the light receiving element 4, a photo diode can be specifically listed.

It is preferable that the light receiving element 4 be formed with an electrode for electrically connecting to the substrate 2 such that when the light receiving element 4 is packaged on the substrate 2, a light receiving direction is parallel with the surface of the substrate 2.

Pairs of the light emitting element 3 and the light receiving element 4 constitute a light receiving/emitting unit. The unit is located on the substrate 2 such that the light emitting portion and light receiving portion are opposed to each other. Therefore, a plurality (four, in the illustrated example) of the light receiving/emitting units are provided on the substrate 2.

The optical fiber 5 optically connects the light emitting element 3 to the light receiving element 4 for each of the light receiving/emitting units. For example, as shown in FIG 2, a plurality (four, in the illustrated example) of the optical fibers 5a, 5b, 5c, 5d are brought together in a side-by-side manner and coated with a first coating material 6 to form an optical fiber tape 7. FIG. 2 is a partial enlarged cross-sectional view of the optical fiber tape 7 taken along the line I-I in FIG. 1.

The optical fiber 5 is made of a synthetic resin excellent in light transmission. It may be a plastic optical fiber (hereinafter, sometimes denoted by reference numeral 5) constituted by a high-refractive-indexed core made of a polymeric material and a cladding layer with low-refractive index that surrounds the outer periphery of the core. As for a material to be used for the core, for example, a polymethyl methacrylate resin (PMMA) can be tinted. As for a material to be used for the cladding layer, for example, a fluoroplastic can be listed. An outer diameter of the plastic optical fiber 5 is not specifically limited.

As for the first coating material 6, for example, a thermoplastic resin such as a polyethylene phthalate, an acrylic resin, a polyethylene, a polypropylene, a polyamide, and a polystyrene; a thermosetting resin such as an epoxy resin and a phenol resin represented by a bakelite; an ultraviolet curing resin based on urethane acrylate; an ultraviolet curing resin based on silicone acrylate; an ultraviolet curing resin based on epoxy acrylate; and an ultraviolet curing resin based on polyester acrylate can be used.

With the optical fiber tape 7, light emitting sides of the light emitting elements 3 and light receiving sides of the light receiving elements 4 are coupled. As a result, a plurality of the optical wires 5 (5a, 5b, 5c, 5d) can be connected at a time for every light receiving/emitting unit

As such, the optical fiber tape 7 can be attached at a time to a plurality of light emitting elements and light receiving elements, since a plurality of plastic optical fibers are arranged substantially parallel with one another

This prevents optical fibers (plastic optical fibers) from tangling, and improves reliability. Furthermore, the optical fiber tape 7 suffers less outline deformation compared with a plastic optical fiber. Therefore, an advantage is also obtained that when a passive alignment packaging is performed with reference to the outer circumference of the plastic optical fiber 5 or the optical fiber tape 7, the positional accuracy for the packaging can be improved.

The optical fiber tape 7 can be manufactured, for example, in the following manner, which is not shown in the figures. Here, the manufacturing method therefor will be described with reference to the optical fiber tape 7 in which four plastic optical fibers are used as the optical fibers 5 by way of example.

First, four plastic optical fibers 5 are prepared. These plastic optical fibers 5 (5a. 5b, 5c, 5d) are arranged in straight lines so as to be substantially parallel with one another in the longitudinal direction.

Next, the plastic optical libers 5 are inserted into a cavity of a coating die. A resin liquid such as an ultraviolet curing resin is supplied to the die to be applied on the exterior of the plastic optical fibers 5 arranged as described above. The type of the resin liquid is not specifically limited. However, it is desirable that a resin liquid of ultraviolet curing type be used for making manufacturing time shorter.

Subsequently, the plastic optical fibers 5 applied with the resin liquid are drawn out of the opening of the die. The resin liquid is cured by curing means such as ultraviolet radiation to form a resin layer made of the first material 6 on the exterior of the plastic optical fibers 5, thus obtaining the optical fiber tape 7.

Thus, arranging a plurality of the plastic optical fibers 5 in straight lines to form a tape can tremendously reduce the cost for packaging on the substrate 2 and can make outline deformation small compared with the case of a single plastic optical fiber. Therefore, packaging accuracy can be improved.

The optical/electrical interconnect board 1 of the present invention as shown in FIG 1 can be manufactured as follows: a plurality of light emitting elements 3 and light receiving elements 4 prepared on the substrate 2 are fixed to electrodes formed on predetermined positions on the substrate 2 by a method that can secure electrical conduction such as soldering. Next, between the light emitting elements 3 and the light receiving elements 4 that pairwise constitute the light receiving/emitting units, the optical wiring tape 5 for optically connecting the two elements is attached by means of an adhesive, etc.

As a result, an optical fiber tape using a plastic optical fiber resistant to temperatures up to, for example, approximately 85°C can be packaged without being affected by a solder packaging, which is a simple and inexpensive joining method but requires heating to 200°C or higher.

Therefore, the optical/electrical interconnect board 1 with the above configuration can be actualized only by very simple steps of packaging a plurality of light emitting elements 3 and light receiving elements 4 on the substrate 2; and attaching the optical fiber tape 7 for connecting the light emitting elements 3 to the light receiving elements 4.

When an electric signal is inputted to the light emitting element 3 via an electrode of the substrate 2, the optical/electrical interconnect board 1 uses the light emitting element 3 to convert the electric signal into an optical signal. Next, the optical signal enters a light receiving surface of the light receiving element 4 via the optical wire 5 made of a transmissive resin in the optical wiring tape 7, and the optical/electrical interconnect board 1 uses the light receiving element 4 to convert the optical signal into an electric signal. The electric signal is then outputted from another electrode of the substrate 2.

The optical/electrical interconnect board of the present invention is not limited to the above-described first embodiment. Hereunder is a description of other embodiments of the present invention. In the following embodiments, similar constituent parts as those of the first embodiment are denoted by the same reference numerals, and a description thereof is omitted. Unless otherwise specified, the description thereof is the same.

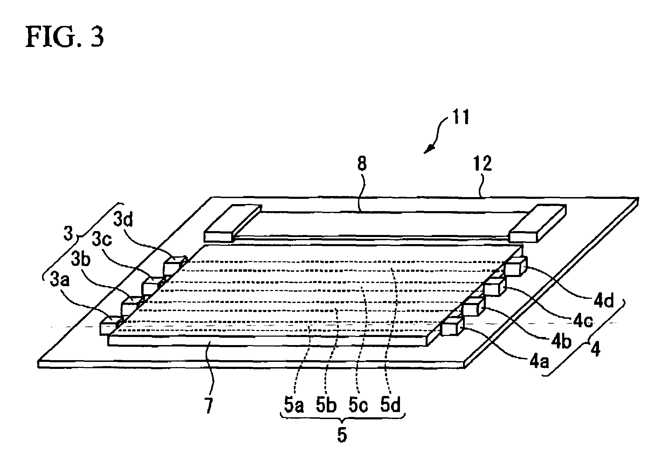

A base material may be a single rigid board provided with an electrical circuit when no movable portion is needed. FIG. 3 is a schematic perspective view showing a second embodiment of an optical/electrical interconnect board according to the present invention.

Therefore, for example, as shown in FIG. 3, an optical/electrical interconnect board 11 of the second embodiment may be, on a single rigid board 12 as a base material, packaged with: a plurality of light emitting elements 3 (3a, 3b, 3c, 3d) and light receiving elements 4 (4a, 4b, 4c, 4d); and an optical fiber tape that optically connects the light emitting elements 3 to the light receiving elements 4 for every light receiving/emitting unit composed of the light emitting element 3 and the light receiving element 4, the optical fiber tape being formed by bringing together optical fibers 5 (5a, 5b, 5c, 5d) in a side-by-side manner and coating with a first coating material 6; and further with an electrical circuit 8.

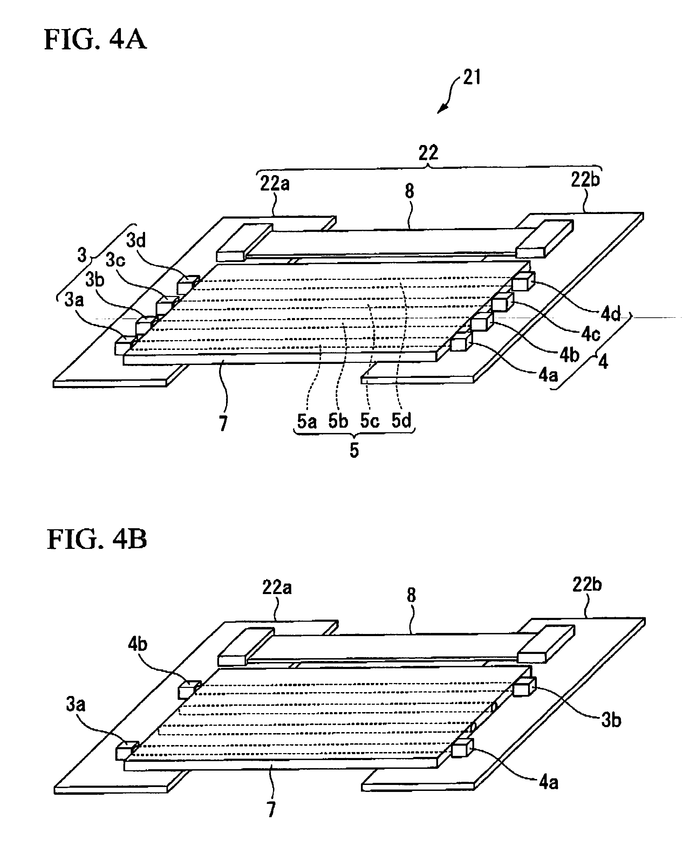

Even in the case with a movable portion, the base material is not limited to a single base material with flexibility only if it can achieve bendability. Therefore, for example, the base material can be configured so as to be divided into at least two. FIGS. 4A and 4B are schematic perspective views showing a third embodiment of an optical/electrical interconnect board according to the present invention.

As shown in FIG. 4A, an optical/electrical interconnect board 21 of the third embodiment may include: for example, two rigid boards 22a, 22b with rigidity as a base material; and a plurality of light receiving/emitting units composed of light emitting elements 3 and light receiving elements 4, in which a plurality of light emitting elements 3 (3a, 3b, 3c, 3d) are packaged on one rigid board 12a and a plurality of light receiving elements 4 (4a, 4b, 4c, 4d) are packaged on the other rigid board 12b, in which an optical fiber tape is packaged that optically connects the light emitting elements 3 to the light receiving elements 4 for every light receiving/emitting unit composed of the light emitting element 3 and the light receiving element 4, the optical fiber tape being formed by bringing together the optical fibers 5 (5a, 5b, 5c, 5d) in a side-by-side manner and coating with a first coating material, and in which an electrical circuit 8 is packaged so as to bridge the two rigid boards 22a, 22b.

Furthermore, as shown in FIG. 4B, bidirectional optical interconnects can be achieved by packaging a light emitting element 3a and a light receiving element 4b on one rigid board 22a, and a light receiving element 4a and a light emitting element 3b on the other opposed rigid board 22b.

In the examples shown in FIGS. 4A and 4B, the two rigid boards 22a, 22b are widely spaced apart from each other. However, in this embodiment, the rigid boards may be in contact with each other as long as they are divided.

The base material divided into at least two of this embodiment may be a flexible board.

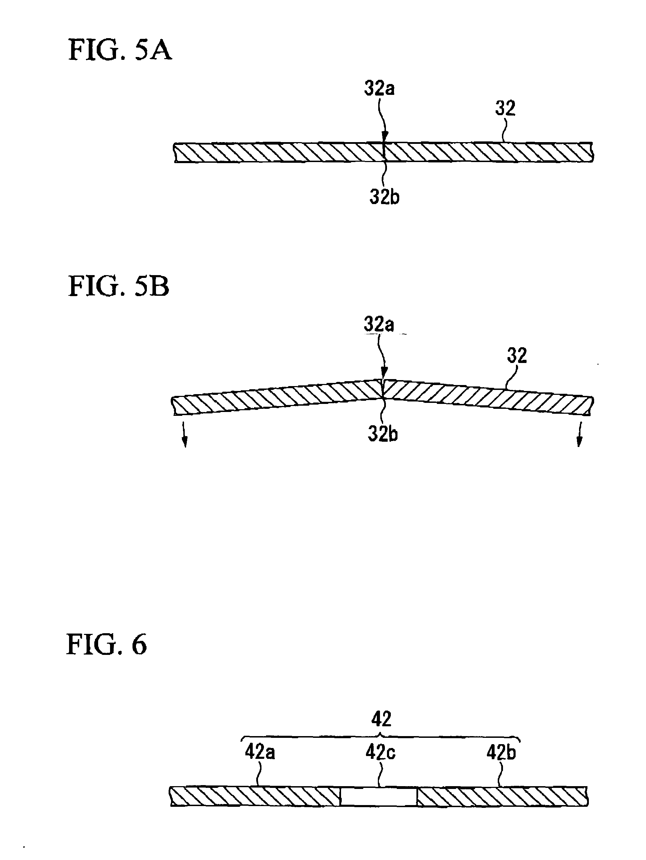

As for a base material with a movable portion, the configuration thereof is not limited to the one mentioned above in which a base material is completely divided. It may have a divided portion, that is, a portion that is partially joined FIGS. 5A and 5B are schematic side views showing another example of a base material used for an optical/electrical interconnect board according to the third embodiment.

As shown in FIGS. 5A and 5B, a base material 32 is a rigid board that has a cut 32a so as to leave a portion 32b (see FIG. 5A). Therefore, it may be configured such that bendability in a movable portion is achieved by opening the cut 32a with the portion 32b as a hinge (see FIG. 5B).

Furthermore, as for a base material with a movable portion, the base material may locally have a different property. FIG. 6 is a schematic side view showing still another example of a base material used for an optical/electrical interconnect board according to the third embodiment.

As shown in FIG. 6, a flexible board 42c is located between rigid boards 42a, 42b that are divided into two. Thus, the rigid boards 42a, 42b are integrally assembled by means of the flexible board 42c to form a base material 42. As a result, it may be configured such that bendability in a movable portion is achieved.

Unless the optical fiber tape has a plurality of optical fibers 5 arranged in straight lines, coupling efficiency to a particular light emitting element or light receiving element becomes lower. As a result, driving current for the light emitting element is required to be higher, leading to a problem in that power consumption of the optical/electrical interconnect board is increased. When the coupling efficiency is even lower, the light receiving element cannot receive a sufficient amount of light necessary for communication. Furthermore, element properties are expected to vary tremendously for every product. Therefore, the optical fibers in the optical fiber tape need to be arranged in straight lines such that coupling efficiencies between the plastic optical fibers and all the light emitting elements and light receiving elements in use become substantially the same, to increase the coupling efficiency of the optical fibers.

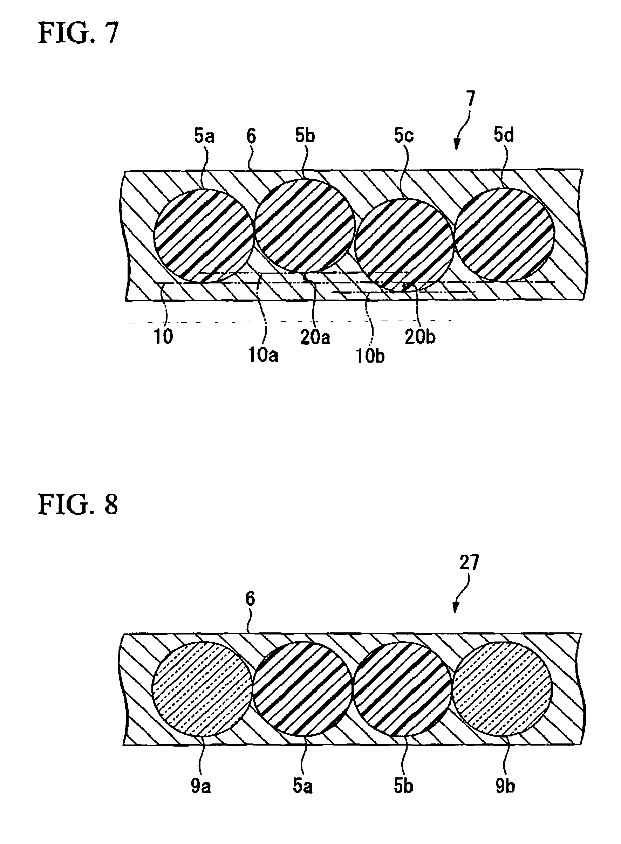

As means for evaluating the coupling efficiency, for example, a method for measuring a planarity as shown in FIG. 7 is listed. FIG. 7 is a partial enlarged cross-sectional view for explaining how to define a planarity in an optical/electrical interconnect board of the present invention.

FIG. 7 is a partial enlarged cross-sectional view of an optical wiring tape 7 packaged on an optical/electrical interconnect board according to the present invention (corresponding to the cross-sectional view of the optical wiring fiber 7 in FIG. 1 taken along the line I-I).

For example, in the case of an optical fiber tape 7 with four optical fibers 5a, 5b, 5c, 5d as shown in FIG. 7, the planarity is obtained as a maximum value between a distance 20a and a distance 20b. The distance 20a is from a reference line 10 that is to come into simultaneous contact with outer peripheries of the optical fibers 5a, 5b at the outermost ends of the optical fiber tape 7 to an outer peripheral position of the optical fiber 5b that is upwardly displaced from the reference line 10, that is, to an outer circumferential tangent 10a that comes into contact with the outer circumference of the optical fiber 5b and that is parallel with the reference line 10. The distance 20b is from the reference line 10 to an outer peripheral position of the optical fiber 5c that is downwardly displaced from the reference line 10, that is, to an outer circumferential tangent 10b that comes into contact with the outer circumference of the optical wire 5c and that is parallel with the reference line 10.

Measuring a planarity in this manner enables evaluation of coupling efficiency, allowing prediction of communication characteristics in advance without actually measuring light receiving intensity. Therefore, once a relationship between the planarity and the light receiving intensity is measured, coupling efficiency for packaging optical fibers with high alignment accuracy can be evaluated afterwards based on the obtained planarity. As a result, an optical/electrical interconnect board can be obtained in which individual optical fibers have substantially the same transmission loss (efficiency) and communication characteristics are improved.

In the optical/electrical interconnect board of the present invention, the configuration of an optical fiber tape is not limited to that in the first embodiment but may be modified in various ways. For example, the optical fiber tape to be packaged on the optical/electrical interconnect board of the present invention may be configured so as to include at least one plastic optical fiber and at least one reinforcing wire member by replacing one or more of the plastic optical fibers for use as optical fibers with reinforcing wire member(s).

FIG. 8 is a partial enlarged cross-sectional view showing a second embodiment of an optical wiring tape to be packaged on the optical/electrical interconnect board of the present invention.

As shown in FIG. 8, when for example, four optical fibers are located, an optical fiber tape 27 is configured such that: two plastic optical fibers 5a, 5b are arranged in parallel with each other; two glass optical fibers 9a, 9b as reinforcing members are located on the outer sides of the two plastic optical fibers 5a, 5b, one for each side; and the four fibers are brought together side-by-side and are coated with a first coating material 6.

Replacing one or more of the plastic optical fibers in the optical fiber tape with reinforcing wire member(s) in this manner can improve a planarity with good repeatability and improve communication characteristics.

A reinforcing wire member 9 (9a, 9b) is used for improving a planarity, and thus does not need to function as a transmission path for communication. Therefore, it may be a wire member other than a plastic optical fiber. For example, a steel wire or a fiber-reinforced plastic (FRP) fiber member can be used.

Using an optical fiber whose core is made of glass (hereinafter, referred to as glass optical fiber) as the reinforcing wire member 9 (9a, 9b) can provide the optical fiber tape with heat resistance.

When a passive alignment packaging is performed with reference to an outer periphery of the optical fiber tape, it is preferable that an outer diameter of the reinforcing wire member and an outer diameter of the plastic optical fiber be substantially the same.

When one or more of the plastic optical fibers for use as optical fibers are relocated by reinforcing wire member(s), the optical fiber tape to be packaged on the optical/electrical interconnect board of the present invention is desirably configured such that two or less plastic optical fibers are located to be adjacent to each other.

A third embodiment of the present invention is a plastic optical fiber tape with a reinforcing wire member, in which the plastic optical fiber and the reinforcing wire member are different in outer diameter, that is, a wire diameter (outer diameter) of the reinforcing wire member is adjusted alignment accurately. As for the reinforcing wire member, for example, a glass optical fiber can be used.

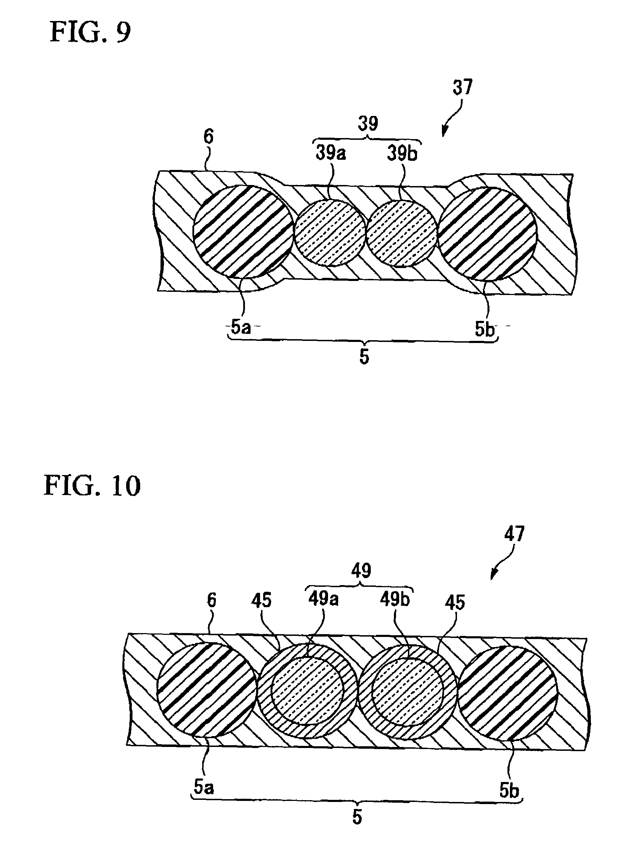

To be more specific, in a plastic optical fiber tape in which a glass optical fiber is used for a reinforced wire member, any configuration may be allowed as long as at least one plastic optical fiber and at least one glass optical fiber are arranged in parallel with each other. In this embodiment, for example, as shown in FIG. 9, two glass optical fibers 39a, 39b as reinforcing members 39 are adjacently arranged in parallel with each other; two plastic optical fibers 5a, 5b are located on the outer sides of the two glass optical fibers 39a, 39b, one for each side; the four fibers are brought together side-by-side and are coated with a first coating material 6 to form an optical wiring tape 37. FIG. 9 is a partial enlarged cross-sectional view showing the third embodiment of an optical fiber tape to be packaged on an optical/electrical interconnect board.

As for a reinforcing wire member 39 that constitutes the optical fiber tape 37, a glass optical fiber with a wire diameter in the range of 30 µm or more and 250 µm or less is desirable. When the glass optical fiber has a wire diameter larger than 250 µm, the minimum bending diameter of the glass optical fiber becomes larger. Therefore, it is difficult to sufficiently meet the requirements of movable portions of consumer electric products that tend to be downsized. Furthermore, reliability may be decreased since probability of rupture of the glass optical fiber due to repetitive bending tremendously increases. On the other hand, when the glass optical fiber has a wire diameter smaller than 30 µm, handling ability of the fiber is poor, and thus is not industrially desirable. It is further desirable that the wire diameter of the glass optical fiber be in the range of 80 µm or more and 125 µm or less. Using a glass optical fiber with a diameter in this range can achieve further favorable resistance to repetitive bending and sufficient reliability, and obtain more stable transmission characteristics.

It is desirable that the number of reinforcing wire members used in the optical fiber tape be adjusted in consideration of the ratio between a cross-sectional area of the reinforcing wire member(s) used for the optical fiber tape and a cross-sectional area of the plastic optical fiber(s) included in the optical fiber tape. Letting a sum total of the plastic optical fiber(s) be A (mm²) and a sum total of the glass optical fiber(s) be B (mm²), the number can be determined based on a value of B divided by A (hereinafter, referred to as value of B/A).

When the value of B/A is too high, the rigidity of the glass optical fiber is too high, resulting in too high a rigidity of the optical wiring tape. Therefore, this is not preferable for application to movable portions of consumer electric products. On the other hand, when the value of B/A is too low, resistance to compressive stress in the longitudinal direction of the glass optical fiber is not sufficient. As a result, a resin used for forming a plastic optical fiber or tape is subjected to a contractive force larger than the compressive stress at high temperatures. Therefore, it becomes difficult to suppress deformation of an optical fiber tape retained at high temperatures. The present inventors confirmed, from the above viewpoint, that when an acrylic plastic optical fiber with a wire diameter of 250 µm is utilized as an optical wire member and a glass optical fiber made of silica glass is used, a favorable property is obtained with a value of B/A in the range of 0.007 or more to 0.25 or less.

With the advantage described above, an optical fiber tape can be obtained that can bend around a tight radius and has strong resistance to repetitive bending without damaging outline accuracy and productivity of the optical wiling tape. Using a glass optical fiber as a reinforcing wire member can provide the optical fiber tape with heat resistance. For example, even at a high temperature of 85°C, softening or constriction of the material does not deform the plastic optical fiber and does not damage the optical transmission capacity thereof. Thus, an optical fiber tape excellent in long-term stability can be obtained.

Therefore, in the optical fiber tape according to the present invention, optimizing the diameter of the glass optical fiber as the reinforcing member and the number thereof can obtain more favorable resistance to repetitive bending.

The arrangement order of the plastic optical fibers and the reinforcing wire members (e.g., glass optical fibers) is not specifically limited. However, taking deformity at high temperatures and a planarity of the optical wiring tape into consideration, it is desirable that they be arranged in a laterally symmetrical manner.

To obtain more favorable resistance to repetitive bending and more stable transmission characteristics at high temperatures as mentioned above, a wire diameter of the glass optical fiber as the reinforcing wire member is made smaller than that of the plastic optical fiber. As a result, the planarity of the plastic optical fiber may be decreased due to displacements of individual optical fibers, etc.

Thus, in a fourth embodiment of the present invention, as shown in FIG. 10, on the circumferences of glass optical fibers 49 is previously coated a second coating material 45 that is only slightly constricted by heat and that can be in very close contact with a glass optical fiber and a resin layer (material for forming a tape), thus making the outer diameters thereof the same as the wire diameter (outer diameter) of plastic optical fibers 5. Two glass optical fibers 49a, 49b that have a second coating material 45 on the circumferences thereof are adjacently arranged in parallel with each other as reinforcing members 49. Two plastic optical fibers 5a, 5b are located on the outer sides of the glass optical fibers 49a, 49b, one for each side. The four fibers are then brought together side-by-side and are coated with a first coating material 6 to form an optical fiber tape 47. FIG 10 is a partial enlarged cross-sectional view showing the fourth embodiment of an optical fiber tape to be packaged on an optical/electrical interconnect board of the present invention.

As for the second coating material 45, for example, an ultraviolet curing resin, a heat curing resin, or a thermoplastic resin can be used.

As a result, a planarity of the plastic optical fiber can be prevented from decreasing (can be improved).

### EXAMPLES

### Example 1

Next, to confirm that plastic optical fibers in the plastic optical tape are required to be arranged in straight lines, a planarity of the case as shown in FIG 7B was evaluated where, in an optical fiber tape 7 with four plastic optical fibers 5a, 5b, 5c, 5d arranged in parallel with one another, one fiber 5b of the inner two plastic optical fibers 5b, 5c is upwardly displaced and the other fiber 50 is downwardly displaced. The planarity was obtained as a maximum value among distances from a line (hereinafter, referred to as reference line) 10 connecting the outer circumferences of the two plastic optical fibers 5a, 5d at both ends of the optical fiber tape 7 to the outer circumferences of the plastic optical fibers 5b, 5c. Note that the plastic optical fibers 5 have a length of 1000 mm.

Light receiving intensity at light receiving elements was evaluated at planarities of 10 µm, 30 µm, 50 µm, and 100 µm. The results are shown in Table 1.

**Table 1**

| Planarity [µm] | Light Intensity [dBm] | | | |
|---|---|---|---|---|
| | Light receiving element a | Light receiving element b | Light receiving element c | Light receiving element d |
| 10 | -18.3 | -18.9 | -17.5 | -18.6 |
| 30 | -19.2 | -18.5 | -17.7 | -19.4 |
| 50 | -18.2 | -17.8 | -18.4 | -19.9 |
| 100 | -18.0 | -25.1 | -22.6 | -21.3 |

Thus, as shown in Table 1, when the optical fiber tapes had a planarity of 50 µm or less, all the four light receiving elements were able to receive light intensity of -20 dBm or more, and thus communication was possible. However, when the optical fiber tape had a planarity of 100 µm, the least light intensity for the four light receiving elements was -25.1 dBm, and thus communication was not possible.

Therefore, it was found that plastic optical fibers in the plastic optical fiber tape are required to be arranged in straight lines.

### Example 2

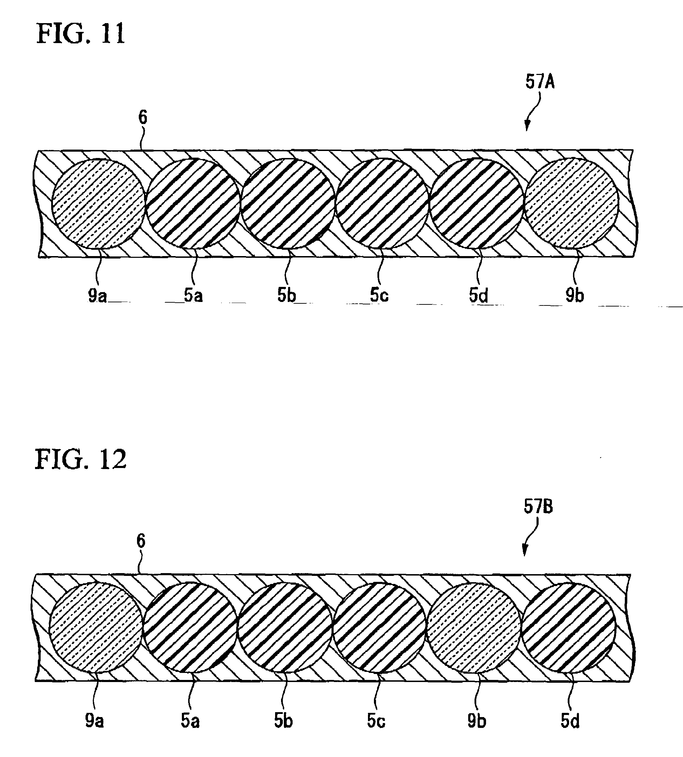

Next, to confirm that replacing one or more of the plastic optical fibers in the optical fiber tape with the reinforcing wire member(s) can improve a planarity with good repeatability, four optical fiber tapes 57A, 57B, 57C, 57D, as shown in FIGS. 12 to 15 were manufactured. In the optical fiber tapes 57A, 57B, 57C, 57D, six plastic optical fibers are arranged in parallel with one another, and reinforcing wire members are located such that the number of adjacent plastic optical fibers is four, three, two, and one, respectively.

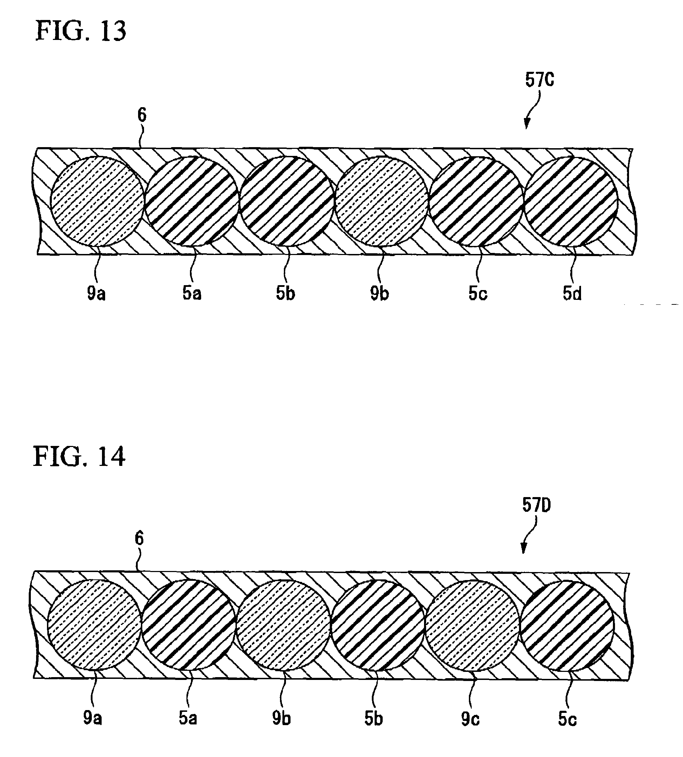

That is, in FIG. 11, outermost plastic optical fibers are relocated by reinforcing wire members 9a, 9b, respectively such that four optical fibers are adjacent to each other. In FIG. 12, an outermost plastic optical fiber at one end and a second outermost plastic optical fiber at the other end are relocated by reinforcing wire members 9a, 9b such that three plastic optical fibers are adjacent to each other. In FIG. 13, an outermost plastic optical fiber at one end and a third outermost plastic optical fiber at the other end are relocated by reinforcing wire members 9a, 9b such that two plastic optical fibers are adjacent to each other. In FIG. 14, three even-numbered or odd-numbered plastic optical fibers from one end are relocated by reinforcing wire members 9a, 9b, 9c such that the plastic optical fibers are separated from each other.

As for the reinforcing wire members 9, glass optical fibers based on silica glass were used. The plastic optical fibers 5 and glass optical fibers based on silica glass used in this example had a length of 1000 mm

The planarities of the four optical wiring tapes 57A, 57B, 57C, 57D manufactured as described above were evaluated in a similar manner as in Example 1. The results are shown in Table 2.

**Table 2**

| Number of adjacent plastic optical fiber(s) | Planarity [µm] |
|---|---|
| 4 | 120 |
| 3 | 50 |
| 2 | 25 |
| 1 | 10 |

Thus, as shown in Table 2, it is found that the number of the adjacent plastic optical fibers is desirably three or less since it is desired in the above-mentioned Example 1 that the planarity of the optical wiring tape be ±50 µm or less.

### Example 3

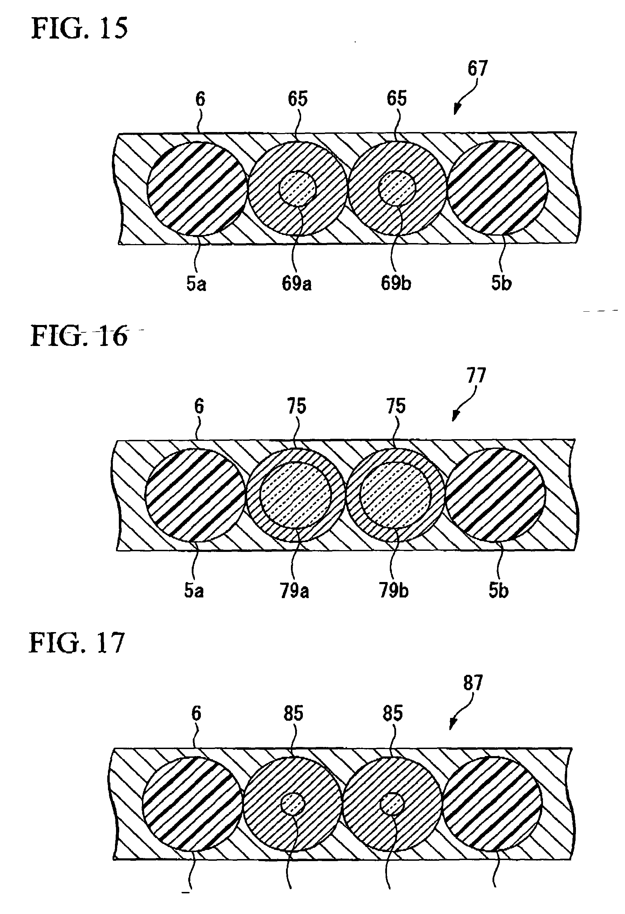

Next, to confirm that when applied to a movable portion, an optical fiber tape with a reinforcing wire member comes to have strong resistance to repetitive bending or twisting by accurately adjusting the wire diameter (outer diameter) of the reinforcing wire member, an optical fiber tape 67 as shown in FIG. 15 was manufactured as follows: two glass optical fibers 69a, 69b were formed by previously coating a second coating material 65 on the outer circumferences of glass optical fibers 69 with a diameter of 125 µm as reinforcing wire members to make the outer diameter thereof equal to the wire diameter of plastic optical fibers 5 with a diameter of 500 µm; the glass optical fibers 69a, 69b were adjacently arranged in parallel to each other, plastic optical fibers 5a, 5b were located on the outer sides of the glass optical fibers 69a, 69b, one for each side; and these four fibers were brought together side-by-side and were coated with a first coating material 6.

The optical fiber tape 67 was cut to a length of 200 mm, and both ends thereof were mirror polished. A ferrule and a connector are used for each of the mirror polished surfaces to couple the optical fiber tape 67 to an LED with a wavelength of 650 nm and a power meter. Then, insertion loss of the plastic optical fibers 5 constituting the optical fiber tape 67 was measured to be 0.04 dB.

Next, the optical fiber tape 67 was temporarily uncoupled from the LED and the power meter. The optical fiber tape 67 was then placed in a bending test machine for an endurance test

The test was performed under conditions of a bending diameter of 7 mm, and a repetitive bending rate of 60 times per minute. After a repetitive bending test of 100,000 times, the optical wiring tape 67 was coupled to the LED with a wavelength of 650 nm and the power meter. Then, insertion loss was measured to be 0.06 dB.

The optical fiber tape 67 was torn apart and observed for change in appearance of the plastic optical fibers 5 and the glass optical fibers 69. It was confirmed that there was no deterioration such as rupture or damage.

On the other hand, an optical fiber tape 77 as shown in FIG. 16 was manufactured as follows: two glass optical fibers 79a, 79b were formed by previously coating a second coating material 75 on the outer circumferences of glass optical fibers 79 with a diameter of 300 µm as reinforcing wire members to make the outer diameter thereof equal to the wire diameter of plastic optical fibers 5 with a diameter of 500 µm; the glass optical fibers 79a, 79b were adjacently arranged in parallel to each other; plastic optical fibers 5a, 5b were located on the outer sides of the glass optical fibers 79a, 79b, one for each side; and these four fibers were brought together side-by-side and were coated with a first coating material 6.

The optical fiber tape 77 was cut to a length of 200 mm, and both ends thereof were mirror polished. A ferrule and a connector were used for each of the minor polished surfaces to couple the optical fiber tape 67 to an LED with a wavelength of 650 nm and a power meter. Then, as in the case of the above-mentioned optical fiber tape 67, insertion loss of the plastic optical fibers 5 constituting the optical fiber tape 77 was measured. The value was 6.05 dB.

The optical fiber tape 77 was torn apart and observed for change in appearance of the plastic optical fibers 5 and the glass optical fibers 79. The glass optical fibers 79 were ruptured everywhere.

As described above, when the wire diameter (outer diameter) of the reinforcing wire materials was 300 µm, no change caused by insertion loss was found, but the glass optical fibers as the reinforcing wire members were ruptured. Therefore, strong resistance to repetitive bending could not be obtained. However, by coating the second coating material beforehand on the circumferences of the reinforcing wire members with a wire diameter (outer diameter) of 125 µm to make the wire diameter thereof equal to the wire diameter of plastic optical fibers, characteristics equivalent to those before the bending test were obtained. Therefore, it was confirmed that the optical fiber tape 67 has strong resistance to repetitive bending.

### Example 4

Furthermore, to confirm that an optical fiber tape with a reinforcing member comes to have improved heat resistance by accurately adjusting the wire diameter (outer diameter) of the reinforcing wire member, an optical fiber tape 67 as shown in FIG. 15 was manufactured in which a second coating material 65 had been coated beforehand on the outer circumferences of the above-mentioned reinforcing wire members with a diameter of 125 µm to make the outer diameter thereof equal to the wire diameter of plastic optical fibers 5. The optical fiber tape 67 was then cut to a length of 1000 mm, and both ends thereof were mirror polished. A ferrule and a connector were then used for each of the mirror polished surfaces to couple the optical fiber tape 67 to an LED with a wavelength of 650 nm and a power meter. Subsequently, insertion loss of the plastic optical fibers 5 constituting the optical fiber tape 67 was measured to be 0.20 dB.

Next, the optical fiber tape 67 was temporarily uncoupled from the LED and the power meter. The optical fiber tape 67 was then wound in a coil with a diameter of 100 mm, and put in a constant-temperature bath set to a temperature of 85°C for a high-temperature test. After 24 hours, the optical fiber tape 67 was taken out of the constant-temperature bath, and again coupled to the LED and the power meter. Then, insertion loss was measured and an increase in the loss after the high-temperature test was 0.27 dB.

The optical fiber tape 67 was torn apart and observed for change in appearance of the plastic optical fibers 5 and the glass optical fibers 69. It was confirmed that there was no particular change.

On the other hand, an optical fiber tape 87 as shown in FIG. 17 was manufactured as follows: two glass optical fibers 89a, 89b were formed by previously coating a second coating material 85 on the outer circumferences of glass optical fibers 89 with a diameter of 25 µm as reinforcing wire members to make the outer diameter thereof equal to the wire diameter of plastic optical fibers 5 with a diameter of 500 µm; the glass optical fibers 89a, 89b were adjacently arranged in parallel to each other; plastic optical fibers 5a, 5b were located on the outer sides of the glass optical fibers 89a, 89b, one for each side; and these four fibers were brought together side-by-side and were coated with a first coating material 6.

The optical fiber tape 87 was then cut to a length of 1000 mm, and both ends thereof were mirror polished. A ferrule and a connector were then used for each of the mirror polished surface to couple the optical fiber tape 87 to an LED with a wavelength of 650 nm and a power meter. Subsequently, as in the case of the above-mentioned optical fiber tape 67, insertion loss of the plastic optical fibers 5 constituting the optical fiber tape 87 was measured. The value was 0.18 dB.

Furthermore, the optical fiber tape 67 was wound in a coil with a diameter of 100 mm, and put in a constant-temperature bath set to a temperature of 85°C to similarly perform a high-temperature test. After 24 hours, the optical fiber tape 87 was taken out of the constant-temperature bath. The optical fiber tape 87 was then observed for change in appearance. The whole the optical fiber tape 87 was slightly curled, and large bent deformations were found in several spots. The optical fiber tape 87 was again coupled to the LED with a wavelength of 650 nm and the power meter, and insertion loss was measured. However, the measurement with the power meter failed since the light that had entered from one end did not reach the other end with sufficient intensity. This is presumably because transmission loss was tremendously increased due to constriction or bent deformation of the plastic optical fibers 5.

As described above, when the wire diameter (outer diameter) of the reinforcing wire materials was 25 µm, transmission capacity could not be continuously maintained because softening or constriction of the material occurred through the influence of heat. However, by previously coating the second coating material on the circumferences of the reinforcing wire members with a wire diameter (outer diameter) of 125 µm to make the wire diameter thereof equal to the wire diameter of plastic optical fibers, characteristics equivalent to those before the high-temperature test were obtained. Therefore, it was confirmed that the optical fiber tape 67 has heat resistance even at a high temperature of 85°C without suffering deformation or damaged optical transmission capacity of the plastic optical fibers due to softening or constriction of the material.

### Example 5

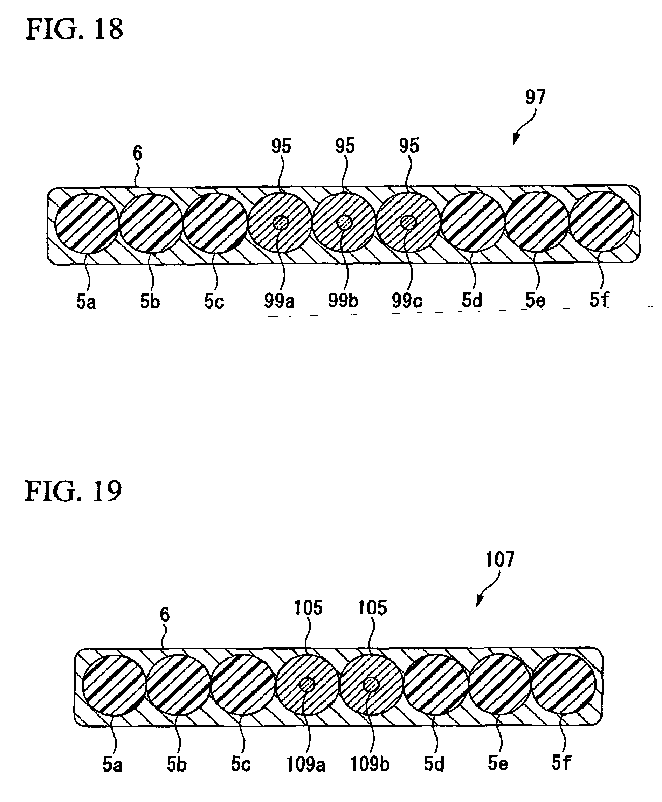

Next, to confirm that an optical fiber tape with a reinforcing member comes to have improved resistance to heat by accurately adjusting the number, that is, the cross-sectional area, of the reinforcing wire members, optical fiber tapes 97 as shown in FIG. 18 were manufactured in which three reinforcing wire members (glass optical fibers made of silica glass) with a diameter of 30 µm (99a to 99c in FIG. 18) and six plastic optical fibers made of acrylic with a diameter of 250 µm (5a to 5f in FIG. 18) were combined. At this time, a value of B/A of the optical fiber tapes 97 was 0.007. To manufacture the optical fiber tapes 97, the wire diameter of the reinforcing wire members 99a to 99c was adjusted to be the same as that of the plastic optical fibers by coating a second coating material 95 beforehand on the outer circumferences of the reinforcing wire members 99a to 99c.

The optical fiber tapes 97 were cut to a length of 1000 mm, and both ends thereof were mirror polished. A ferrule and a connector were used for each of the mirror polished surfaces to couple the optical fiber tapes 97 to an LED with a wavelength of 650 nm and a power meter. Then, as in the case of the optical fiber tape 67, insertion loss of the plastic optical fibers 5a to 5f that constitute the optical fiber tapes 97 was measured. The average value was 0.20 dB.

Next, the optical fiber tapes 97 were temporarily uncoupled from the LED and the power meter. The optical fiber tapes 97 were then wound in a coil with a diameter of 100 mm, and put in a constant-temperature bath set to temperature of 58°C for a high-temperature test. After 24 hours, the optical fiber tapes 97 were taken out of the constant-temperature bath, and again coupled to the LED with a wavelength of 650 nm and the power meter. Insertion loss was measured and an increase in the loss after the high-temperature test was 0.27 dB.

The optical fiber tapes 97 were torn apart and observed for change in appearance of the plastic optical fibers 5a to 5f and the glass optical fibers 99a to 99c. It was confirmed that there was no particular change.

On the other hand, optical fiber tapes 107 as shown in FIG. 19 were manufactured in which two reinforcing wire members (glass optical fibers made of silica glass) with a diameter of 30 µm (109a, 109b in FIG. 19) and six plastic optical fibers made of acrylic with a diameter of 250 µm (5a to 5f in FIG. 19) were combined. At this time, a value of B/A of the optical fiber tapes 107 was 0.005. To manufacture the optical fiber tapes 107, the wire diameter of the reinforcing wire members 109a, 109b was adjusted to be the same as that of the plastic optical fibers by coating a second coating material 105 beforehand on the outer circumferences of the reinforcing wire members 109a, 109b.

The optical fiber tapes 107 were cut to a length of 1000 mm, and both ends thereof were mirror polished. A ferrule and a connector were used for each of the mirror polished surfaces to couple the optical fiber tapes 107 to an LED with a wavelength of 650 nm and a power meter. Then, as in the case of the optical wiring tape 67, transmission loss of the plastic optical fibers 5a to 5f that constitute the optical fiber tapes 107 was measured. The average value was 0.18 dB.

Next, the optical fiber tapes 107 were temporarily uncoupled from the LED and the power meter. The optical fiber tape 107 was then wound in a coil with a diameter of 100 mm, and put in a constant-temperature bath set to a temperature of 85°C for a high-temperatufe test. After 24 hours, the optical fiber tape 107 was taken out of the constant-temperature bath. The optical fiber tape 107 was then observed for change in appearance. The whole the optical fiber tape was slightly curled, and large bent deformations were found in several spots. The optical fiber tape 107 was again coupled to the LED with a wavelength of 650 nm and the power meter, and insertion loss was measured. However, the measurement with the power meter failed since the light that had entered from one end did not reach the other end with sufficient intensity. This is presumably because insertion loss was tremendously increased due to an influence of constriction or bending of the plastic optical fibers.

As described above, when a value of a sum total cross-sectional area B of the reinforcing wire members divided by a sum total cross-sectional area A of the plastic optical fibers (value of B/A) was 0.005, transmission capacity could not be continuously maintained because softening or constriction of the material occurred through the influence of heat. In contrast to this, when the value of B/A was made 0.007, the characteristics equivalent to those before the high-temperature test were maintained even after the high-temperature test. Deformation or damaged optical transmission capacity of the plastic optical fibers due to softening or constriction of the material did not occur even at a high temperature of 85°C. Therefore, it was confirmed that the optical wiring tape 107 in which the value of B/A is 0.07 has excellent heat resistance.

### Example 6

This example describes an optical fiber tape with the same configuration as that in Example 5, with the exception being that the reinforcing wire members had a larger wire diameter. That is, optical fiber tapes 97 as shown in FIG 18 in eight different types were manufactured in which three reinforcing wire members (glass optical fibers made of silica glass) with a several spices of diameter (99a to 99c in FIG 18) and six plastic optical fibers made of acrylic with a diameter of 250 µm (5a to 5f in FIG 18) were combined. At this time, diameters of reinforcing wire members are 13 µm, 15 µm, 21 µm, 27 µm, 49 µm, 63 µm, 88 µm, 99 µm, 119 µm, and 125 µm. Therefore, values of B/A of the optical fiber tapes 97 were 0.005, 0.007, 0.014, 0.023, 0.078, 0.125, 0.312, 0.0454, and 0.500. To manufacture the optical fiber tapes 97, the wire diameter of the reinforcing wire members 99a to 99c was adjusted to be the same as that of the plastic optical fibers by coating a second coating material 95 beforehand on the outer circumferences of the reinforcing wire members 99a to 99c.

The optical fiber tapes 97 were then put in a constant-temperature bath set to a temperature of 85°C for a high-temperature test. After 24 hours, the optical fiber tapes 97 were taken out of the constant-temperature bath. The optical fiber tapes 97 were then observed for change in appearance. No particular change was found for the optical fiber tape with values of B/A of 0.07 or bigger and 0.250 or smaller. The optical fiber tapes 97 were again coupled to the LED with a wavelength of 650 nm and the power meter to determine increases in me insertion loss. The results are shown in Table 3. Under any conditions of the value of B/A, the increases in the loss after the high-temperature test were 0.13 dB or lower, which was confirmed to be equivalent to that before the high-temperature test.

Furthermore, the optical fiber tapes 97 were placed in a bending test machine for an endurance test. The test was performed under conditions of a bending diameter of 7 mm, and a repetitive bending rate of 60 times per minute. The results after a repetitive bending test of 100,000 times was shown in Table 3. No cut was found in the optical fiber tapes 97 having the value of B/A of 0.250 or less Even after the repetitive bending test, the optical fiber tapes offered smooth bending when it was bent around a bending diameter of 7 mm. This showed that flexibility was not lost. Therefore, it was found that the optical fiber tape 97 according to this example has sufficient flexibility even if it is applied to a movable portion (hinge) of a cellular phone or a notebook computer.

**Table 3**

| B/A of Optical Wiring Tape | Increase in Loss after High-temperature Test at 85°C for 24 Hours | Cut after Bending Test of 100,000 Times |
|---|---|---|
| 0.005 | unable to measure | Absent |
| 0.007 | 0.27 dB | Absent |
| 0.014 | 0.22 dB | Absent |
| 0.023 | 0.13 dB | Absent |
| 0.078 | 0.09 dB | Absent |
| 0.125 | 0.04 dB | Absent |
| 0.250 | 0.08 dB | Absent |
| 0.312 | 0.07 dB | Present |
| 0.454 | 0.08 dB | Present |
| 0.500 | 0.05 dB | Present |

An optical/electrical interconnect board of the present invention is applicable to various electric apparatuses, for example, cellular phones, digital still cameras, digital video cameras, personal computers, liquid crystal display television sets, and the like.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. An optical/electrical interconnect board, comprising:
a base material comprising an electrical circuit;
a plurality of light receiving/emitting units, each of the units being constituted by a light emitting element and a light receiving element packaged on the base material; and
an optical fiber tape that connects the light emitting element to the light receiving element for each of the light receiving/emitting units, the optical fiber tape being formed by bringing together optical wires for the units in a side-by-side manner and coating with a first coating material.

2. The optical/electrical interconnect board according to claim 1, wherein the base material is constituted by a single portion.

3. The optical/electrical interconnect board according to claim 1, wherein the base material is constituted by portions divided into at least two, on one of which is located the light emitting elements and on another of which is located the light receiving elements.

4. The optical/electrical interconnect board according to claim 1, wherein the base material is constituted by portions divided into at least two, and on each of the portions are located both one or more of the light emitting elements and one or more of the light receiving elements.

5. The optical/electrical interconnect board according to claim 1, wherein the optical wires constituting the optical fiber tape are arranged substantially parallel to one another in the longitudinal direction thereof.

6. The optical/electrical interconnect board according to claim 1, wherein the optical wiring tape include at least one plastic optical fiber and at least one reinforcing wire member.

7. The optical/electrical interconnect board according to claim 6, wherein the reinforcing wire member is a glass optical fiber.

8. The optical/electrical interconnect board according to claim 6, wherein the plastic optical fiber and the reinforcing fiber member have substantially a same outer diameter.

9. The optical/electrical interconnect board according to claim 8, wherein the optical fibers have a planarity of 50 µm or less, the planarity being obtained as a maximum value among distances from a reference line that is to come into simultaneous contact with outer peripheries of two outermost optical wires of the arranged optical fibers to an outer circumference of other optical fiber.

10. The optical/electrical interconnect board according to claims 6 to 9, wherein the reinforcing wire member is located such that three or less plastic optical fibers are adjacent to each other.

11. The optical/electrical interconnect board according to claim 6, wherein the plastic optical fiber and the reinforcing fiber member of the optical fibers are different in outer diameter from each other.

12. The optical/electrical interconnect board according to claim 11, wherein when the optical fiber tape includes an optical fiber of acrylic with a diameter of 250 µm as the plastic optical fiber and a glass fiber of silica glass as the reinforcing wire member, a value of a sum total cross-sectional area B of the reinforcing wire member divided by a sum total cross-sectional area A of the plastic optical fiber is in a range of 0.007 to 0.25.

13. The optical/electrical interconnect board according to claim 11, wherein the reinforcing wire member has a second coating material on the periphery thereof so as to have substantially a same outer diameter as that of the plastic optical fiber.

14. The optical/electrical interconnect board according to claim 11, wherein the plastic optical fiber and the reinforcing wire member are arranged in a laterally symmetrical manner.

15. An evaluation method of coupling efficiency of an optical/electrical interconnect board, wherein an optical/electrical interconnect board comprising:
a base material comprising an electrical circuit;
a plurality of light receiving/emitting units, each of the units being constituted by a light emitting element and a light receiving element packaged on the base material; and
an optical fiber tape that optically connects the light emitting element to the light receiving element for each of the light receiving/emitting units, the optical fiber tape being formed by bringing together optical fibers for the units in a side-by-side manner and coating with a first coating material, is used to obtain as a planarity a maximum value among distances from a reference line that is to come into simultaneous contact with outer peripheries of two outermost optical wires of the arranged optical fibers to an outer circumference of other optical fiber.
